# EUROPEAN PATENT APPLICATION

(11) **EP 4 227 788 A1**
(43) Date of publication of application: **16.08.2023**
(21) Application number: 21879074.9
(22) Date of filing: 05.08.2021
(51) Int. Cl.: G06F 3/0488

(54) **INFORMATION DISPLAY METHOD AND APPARATUS, ELECTRONIC DEVICE, AND COMPUTER READABLE STORAGE MEDIUM**

(30) Priority: 12.10.2020 CN 202011084751
(71) Applicant: GUANGDONG OPPO MOBILE TELECOMMUNICATIONS CORP., LTD., Dongguan, Guangdong 523860 (CN)
(72) Inventor: HUANG, Qianyang, Dongguan, Guangdong 523860 (CN)
(74) Representative: Taor, Simon Edward William
(86) International application number: PCT/CN2021/110692
(87) International publication number: WO 2022/078027

(57) **Abstract**

An information display method and apparatus, an electronic device, and a computer-readable storage medium are provided. The information display method includes: detecting whether a first terminal and a second terminal are successfully connected with each other; and in response to the first terminal and the second terminal being successfully connected with each other, displaying a prompt information display interface floating over a current display interface of the first terminal. In the method, when the first terminal and the second terminal are successfully connected with each other, the prompt information display interface is displayed on the current display interface, and a user can directly see the prompt information display interface based on the current display interface and intuitively and clearly learn a connection condition between the first terminal and the second terminal on the basis of the prompt information display interface, which enhances user perception and makes man-machine interaction more intelligent.

## Description

### CROSS-REFERENCE TO RELATED APPLICATIONS

This application claims priority to Chinese Patent Application No. 2020110847518, filed on October 12, 2020 and entitled with "INFORMATION DISPLAY METHOD AND APPARATUS, ELECTRONIC DEVICE, AND COMPUTER-READABLE STORAGE MEDIUM", the entire content of which is incorporated herein by reference.

### FIELD

The present disclosure relates to the field of computer technologies, and more particularly, to an information display method and apparatus, an electronic device, and a computer-readable storage medium.

### BACKGROUND

With the development of mobile communication technology, a communication manner between terminals can be seen everywhere in life and production. Generally, before the two terminals communicate with each other, a connection between the two terminals needs to be established first. After the two terminals are successful connected with each other, the two terminals may perform data interaction. For example, when a Bluetooth earpiece communicates with a mobile phone, the Bluetooth earpiece needs to establish a Bluetooth connection with the mobile phone, and then the two communicate with each other after the connection is successful. After two terminals are successfully connected with each other, a user may check whether one of the two terminals is successfully connected with the other of the two terminals through a status bar on a display screen of the other terminal. This viewing manner is not intuitive and clear enough, resluting that man-machine interaction is not intelligent enough.

### SUMMARY

According to embodiments of the present disclosure, an information display method and apparatus, an electronic device, and a computer-readable storage medium are provided, which may intuitively and clearly obtain a connection state between a second terminal and a first terminal.

The information display method includes: detecting whether a first terminal and a second terminal are successfully connected with each other; and in response to the first terminal and the second terminal being successfully connected with each other, displaying a prompt information display interface floating over a current display interface of the first terminal. The prompt information display interface is used for prompting that the first terminal and the second terminal are successfully connected with each other.

Preferably, the method further includes: in response to obtaining a setting operation instruction triggered based on the prompt information display interface in a predetermined time period, hiding the prompt information display interface and displaying a setting interface floating over the current display interface. The setting interface includes a function setting item of the second terminal.

Preferably, the obtaining the setting operation instruction triggered based on the prompt information display interface includes: in response to detecting a touch operation based on a touch screen area corresponding to the prompt information display interface, triggering the setting operation instruction.

Preferably, the prompt information display interface includes a management control. The obtaining the setting operation instruction triggered based on the prompt information display interface includes: in response to detecting that the management control is triggered, generating the setting operation instruction.

Preferably, the setting interface further includes a device identifier of the second terminal.

Preferably, the device identifier of the second terminal includes a device icon and/or a device name of the second terminal.

Preferably, a distance between an upper boundary of the setting interface and a lower boundary of a status bar of the current display interface is greater than zero.

Preferably, a distance between an upper boundary of the setting interface and an upper boundary of the current display interface is greater than a first predetermined threshold.

Preferably, the displaying the setting interface floating over the current display interface includes: obtaining the function setting item of the second terminal and a setting interface template of the second terminal, the setting interface template representing page layout information of each function setting item on the setting interface; and generating the setting interface in accordance with the function setting item and the setting interface template, and displaying the setting interface floating over the current display interface.

Preferably, the method further includes: in response to obtaining no setting operation instruction triggered based on the prompt information display interface in the predetermined time period, hiding the prompt information display interface, and displaying a device icon of the second terminal floating over a status bar of the current display interface.

Preferably, the prompt information display interface includes a device identifier of the second terminal and connection success prompt information.

Preferably, the device identifier includes a device icon and/or a name of the second terminal.

Preferably, the prompt information display interface further includes a mute control. The method further includes: in response to detecting that the mute control is triggered, controlling the second terminal to enter a mute mode.

Preferably, a distance between an upper boundary of the prompt information display interface and a lower boundary of a status bar of the current display interface is greater than zero, and a distance between a lower boundary of the prompt information display interface and an upper boundary of the current display interface is smaller than or equal to a predetermined threshold.

Preferably, the predetermined threshold is determined based on a ratio between a height of the prompt information display interface and a height of the current display interface.

Preferably, the predetermined threshold is equal to one fifth of a height of the current display interface.

Preferably, the displaying the prompt information display interface floating over the current display interface of the first terminal includes: generating the prompt information display interface based on a device identifier of a second device, the connection success prompt information, and a predetermined prompt interface template, and displaying the prompt information display interface floating over the current display interface of the first terminal. The prompt interface template represents page layout information of the prompt information display interface.

An information display apparatus includes: a detection module configured to detect whether a first terminal and a second terminal are successfully connected with each other; and a display module configured to display, in response to the first terminal and the second terminal being successfully connected with each other, a prompt information display interface floating over a current display interface of the first terminal. The prompt information display interface is used for prompting that the first terminal and the second terminal are successfully connected with each other.

Preferably, the information display apparatus further includes: an obtaining module configured to: in response to obtaining a setting operation instruction triggered based on the prompt information display interface in a predetermined time period, hide the prompt information display interface and display a setting interface floating over the current display interface. The setting interface includes a function setting item of the second terminal.

Preferably, the obtaining module is configured to trigger, in response to detecting a touch operation based on a touch screen area corresponding to the prompt information display interface, the setting operation instruction.

Preferably, the prompt information display interface includes a management control. The obtaining module is configured to generate, in response to detecting that the management control is triggered, the setting operation instruction.

Preferably, the setting interface further includes a device identifier of the second terminal.

Preferably, the device identifier of the second terminal includes a device icon and/or a device name of the second terminal.

Preferably, a distance between an upper boundary of the setting interface and a lower boundary of a status bar of the current display interface is greater than zero.

Preferably, a distance between an upper boundary of the setting interface and an upper boundary of the current display interface is greater than a first predetermined threshold.

Preferably, the obtaining module is configured to: obtain the function setting item of the second terminal and a setting interface template of the second terminal, the setting interface template representing page layout information of each function setting item on the setting interface; and generate the setting interface in accordance with the function setting item and the setting interface template, and display the setting interface floating over the current display interface.

Preferably, the information display apparatus further includes a hiding module configured to: in response to obtaining no setting operation instruction triggered based on the prompt information display interface in the predetermined time period, hide the prompt information display interface and display a device icon of the second terminal floating over a status bar of the current display interface.

Preferably, the prompt information display interface includes a device identifier of the second terminal and connection success prompt information.

Preferably, the device identifier includes a device icon and/or a name of the second terminal.

Preferably, the prompt information display interface further includes a mute control. the detection module is further configured to control, in response to detecting that the mute control is triggered, the second terminal to enter a mute mode

Preferably, a distance between an upper boundary of the prompt information display interface and a lower boundary of a status bar of the current display interface is greater than zero, and a distance between a lower boundary of the prompt information display interface and an upper boundary of the current display interface is smaller than or equal to a predetermined threshold.

Preferably, the predetermined threshold is determined based on a ratio between a height of the prompt information display interface and a height of the current display interface.

Preferably, the predetermined threshold is equal to one fifth of a height of the current display interface.

Preferably, the display module is configured to generate the prompt information display interface based on a device identifier of a second device, the connection success prompt information, and a predetermined prompt interface template, and display the prompt information display interface floating over the current display interface of the first terminal. The prompt interface template represents page layout information of the prompt information display interface.

An electronic device includes: a memory having a computer program stored thereon; and a processor. The computer program, when executed by the processor, implements the method for adjusting screen brightness described above.

A computer-readable storage medium has a computer program stored thereon. The computer program, when executed by a processor, implements the diversity receiving method described above.

According to the information display method and apparatus, the electronic device, and the computer-readable storage medium, whether a first terminal and a second terminal are successfully connected with each other is checked; and in response to the first terminal and the second terminal being successfully connected with each other, a prompt information display interface floating over a current display interface of the first terminal is displayed. In the method, when the first terminal and the second terminal are successfully connected with each other, the prompt information display interface is displayed on the current display interface, and a user can directly see the prompt information display interface based on the current display interface and intuitively and clearly learn a connection condition between the first terminal and the second terminal on the basis of the prompt information display interface, which enhances user perception and makes man-machine interaction more intelligent.

### BRIEF DESCRIPTION OF THE DRAWINGS

In order to describe the technical solutions in the embodiments of the present disclosure or the prior art more clearly, the drawings that need to be used in the description of the embodiments or the prior art will be introduced briefly below. Obviously, the drawings described below are only some embodiments of the present disclosure. For those of ordinary skill in the art, other drawings can be obtained based on these drawings without inventive efforts.
FIG. 1 is schematic diagram of an application environment of an information display method according to an embodiment.
FIG. 2 is a flowchart of an information display method according to an embodiment.
FIG. 3 is a schematic diagram of a display interface of a first terminal according to an embodiment.
FIG. 4 is a schematic diagram of a display interface of a first terminal according to an embodiment.
FIG. 5 is a schematic diagram of a display interface of a first terminal according to an embodiment.
FIG. 6 is a schematic diagram of a display interface of a first terminal according to an embodiment.
FIG. 7 is a schematic diagram of a display interface of a first terminal according to an embodiment.
FIG. 8 is a schematic diagram of a display interface of a first terminal according to an embodiment.
FIG. 9 is a schematic diagram of a display interface of a first terminal according to an embodiment.
FIG. 10 is a flowchart of an information display method according to an embodiment.
FIG. 11 is a schematic diagram of a display interface of a first terminal according to an embodiment.
FIG. 12 is a schematic diagram of a display interface of a first terminal according to an embodiment.
FIG. 13 is a schematic diagram of a display interface of a first terminal according to an embodiment.
FIG. 14 is a structural block diagram of an information display apparatus according to an embodiment.
FIG. 15 is a structural block diagram of an information display apparatus according to an embodiment.
FIG. 16 is a structural block diagram of an information display apparatus according to an embodiment.
FIG. 17 is a schematic structural diagram of an electronic device according to an embodiment.

### DETAILED DESCRIPTION

In order to make the objects, technical solutions, and advantages of the present disclosure more apparent, the present disclosure will be described in detail with reference to the accompanying drawings and embodiments. It should be understood that the embodiments described here are only used to explain, rather than limiting, the present disclosure.

It can be understood that the terms "first", "second", and the like used in the present disclosure may be used herein for describing various elements, but these elements are not limited by these terms. These terms are only used for distinguishing a first element from another. For example, a first client may be referred to as a second client without departing from the scope of the present disclosure, and similarly, the second client may be referred to as the first client. Both the first client and the second client are clients, but they are not one client.

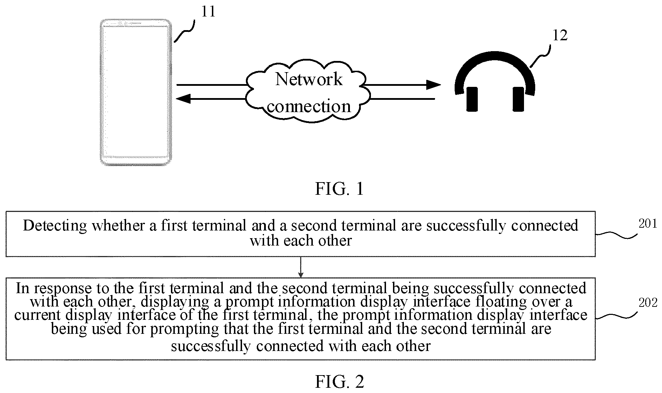

FIG. 1 is schematic diagram of an application environment of an information display method according to an embodiment. As illustrated in FIG. 1, the application environment includes a terminal 11 and a terminal 12. The terminal 11 and the terminal 12 communicate through a network. The terminal 11 may be a device with a display screen such as a mobile phone, a computer, a television, a game machine, or an iPad. Other than a headset illustrated in FIG. 1, the terminal 12 may be a sound box, an earphone, a camera, a vehicle-mounted device, a mouse, a keyboard, a bracelet, a printer, a mobile phone, a computer, a television, a game machine, an iPad, or other devices that have a connection function. Optionally, a connection manner between the terminal 11 and the terminal 12 may be a Bluetooth connection manner, a WiFi connection manner, and a specified protocol connection manner.

FIG. 2 is a flowchart of an information display method according to an embodiment. The information display method in the embodiments is described by taking the terminal 11 running in FIG. 1 as an example. As illustrated in FIG. 2, the information display method includes actions at blocks 201 to 202.

At block 201, whether a first terminal and a second terminal are successfully connected with each other is detected.

In this embodiment, when the second terminal connects with the first terminal, the first terminal is triggered to detect whether the second terminal is successfully connected with the first terminal. For example, when the second terminal connects with the first terminal by Bluetooth, the first terminal detects its own Bluetooth state. When the Bluetooth state is in an idle state, it means that a current Bluetooth connection between the second terminal and the first terminal fails. When the Bluetooth is connected to a certain device, it means that a current Bluetooth connection between the second terminal and a second terminal is successful. Alternatively, when the first terminal needs to connect with the second terminal, the first terminal transmits a Bluetooth connection request to the second terminal, and when the first terminal receives a Bluetooth connection response returned by the second terminal, the connection between the first terminal and the second terminal is determined to be successful. For a connection manner of other protocols, a detection manner of the first terminal is similar, which is not limited in this embodiment.

At block 202, in response to the first terminal and the second terminal being successfully connected with each other, a prompt information display interface floating over a current display interface of the first terminal is displayed. The prompt information display interface is used for prompting that the first terminal and the second terminal are successfully connected with each other.

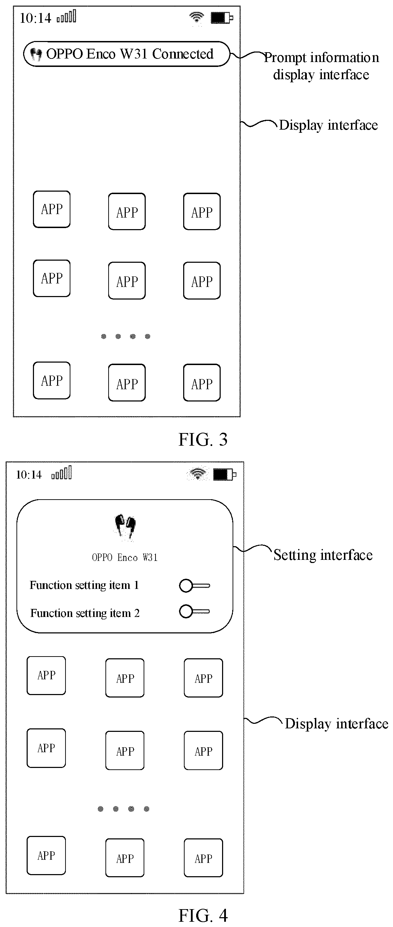

In this embodiment, as illustrated in FIG. 3, it shows a schematic diagram of the layout of the displayed prompt information display interface floating over the current display interface after the first terminal and the second terminal are successfully connected with each other. After the first terminal detects that the first terminal and the second terminal are successfully connected with each other, the first terminal may generate and display connection success prompt information on the current display interface. Optionally, other than connection success information, the prompt information display interface may further include related information of the second terminal, for example, information such as a device identifier, a name identifier, or an icon of the second terminal. As an example, the second terminal serves as the earphone for description, the prompt information display interface may include an icon of the earphone, a device identifier of the earphone, and the connection success information.

Optionally, when displaying the prompt information display interface, the first terminal may display the prompt information display interface floating over any position of the current display interface, for example, the first terminal may display the prompt information display interface floating over the top, middle, or bottom of the current display interface, which is not limited in this embodiment.

According to the embodiments, the information display method include: detecting whether the first terminal and the second terminal are successfully connected with each other; and in response to the first terminal and the second terminal being successfully connected with each other, displaying the prompt information display interface floating over the current display interface of the first terminal. In the method, when the first terminal and the second terminal are successfully connected with each other, the prompt information display interface is displayed on the current display interface, and a user can directly see the prompt information display interface based on the current display interface and intuitively and clearly learn a connection condition between the first terminal and the second terminal on the basis of the prompt information display interface, which enhances user perception and makes man-machine interaction more intelligent.

In order to further optimize data interaction and enable the man-machine interaction to be more intelligent, in an embodiment, the method further includes: in response to obtaining a setting operation instruction triggered based on the prompt information display interface in a predetermined time period, hiding the prompt information display interface and displaying a setting interface floating over the current display interface. The setting interface includes a function setting item of the second terminal.

Here, the setting operation instruction triggered based on the prompt information display interface may be an instruction triggered based on any area of the prompt information display interface, or an instruction triggered based on a specified area of the prompt information display interface.

In this embodiment, the first terminal obtains the setting operation instruction triggered based on the prompt information display interface in the predetermined time period, which indicates that the user needs to perform a function setting operation on the connected second terminal. At this time, the first terminal is triggered to execute an operation of hiding the prompt information display interface. Meanwhile, the first terminal may also display the setting interface floating over the current display interface. For example, the predetermined time period may be 2.5 seconds, 3 seconds, 5 seconds, or other time periods, which is not limited in this embodiment.

As illustrated in FIG. 4, FIG. 4 shows a schematic diagram of the layout of a setting interface of the second terminal on the current display interface of the first terminal when the second terminal is the earphone. In a case where the second terminal is the earphone, a function setting item 1 of the setting interface of the second terminal may be noise reduction, and a function setting item 2 may be wearing induction. Optionally, according to actual situations, a plurality of function setting items is provided, for example, a function setting item 3 is a sound effect mode, a function setting item 4 is a connection volume, and the like. In addition, the second terminal may also be other devices having the connection function, for example, the camera. In a case where the second terminal is the camera, the function setting item may be a photographing aperture, a photographing depth of field, a photographing countdown, etc., which is not limited in this embodiment.

In this embodiment, the first terminal detects whether the setting operation instruction is triggered within the predetermined time period, so as to perform an operation of hiding the prompt information display interface and display the setting interface of the second terminal floating over the current display interface when the setting operation instruction is triggered, so that the user does not need to open a connection setting to perform function item setting for the second terminal, and a setting operation of the user is simplified.

In an embodiment, when the user does not need to perform the function item setting for the second terminal, the prompt information display interface may be hidden. The above method further includes: in response to obtaining no setting operation instruction triggered based on the prompt information display interface in the predetermined time period, hiding the prompt information display interface and displaying a device icon of the second terminal floating over a status bar of the current display interface.

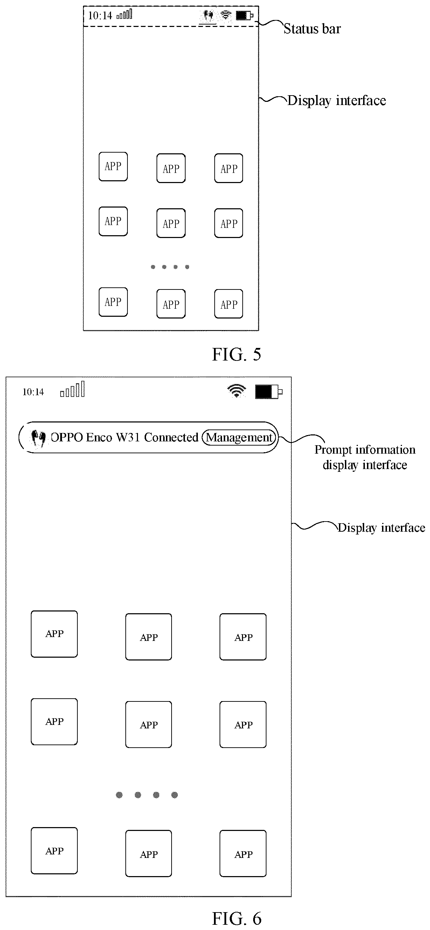

In this embodiment, the predetermined time period may be 2.5 seconds, 3 seconds, 5 seconds, or other specified time periods. As an example, the predetermined time period serves as 2.5 seconds, when the first terminal detects no setting operation instruction triggered based on the prompt information display interface within 2.5 seconds, it is considered that the user doesn't need to perform function setting for the second terminal currently. At this time, referring to FIG. 5, the first terminal may hide a current prompt information display interface and display an identifier of the connected second terminal in a status bar. As an example, the second terminal serves as the earphone, and FIG. 5 shows a schematic diagram of the status bar including the identifier of the second terminal. Optionally, the identifier of the second terminal may be the device icon or other specified virtual identifiers of the second terminal, which is not limited in this embodiment.

In this embodiment, when the first terminal detects no triggering operation that the user sets a function for the second terminal within the predetermined time period, the first terminal hides the prompt information display interface, which causes no problem that the prompt information display interface stays too long on the current display interface. Meanwhile, the user can intuitively obtain a connection state of a second device through a device icon of the second device in the status bar.

Optionally, the first terminal may perform a corresponding operation according to a display area triggered by the user. In an embodiment, the obtaining the setting operation instruction triggered based on the prompt information display interface includes: in response to detecting a touch operation based on a touch screen area corresponding to the prompt information display interface, triggering the setting operation instruction.

The touch screen area corresponding to the prompt information display interface is an area where the prompt information display interface is located. The touch operation may be operations such as a single click, a double click, a sliding, and a long press, which is not limited in this embodiment. In this embodiment, the first terminal may determine whether a current touch point is within a range of the touch screen area corresponding to the prompt information display interface based on a position of the prompt information display interface and a position where the touch point is generated. When the current touch point is determined to be within the range of the touch screen area corresponding to the prompt information display interface, it means that the user wants to set a connection function of the second terminal. At this time, the first terminal determines that the setting operation instruction is triggered, which is not limited in this embodiment.

In this embodiment, the user may trigger the setting operation instruction based on any point of the touch screen area corresponding to the prompt information display interface, and a range of the triggering area is large, so that the user may quickly trigger the setting operation instruction, and the setting operation of the user is simplified.

In order to further improve accuracy of a touch screen operation, in an embodiment, the prompt information display interface includes a management control, and the obtaining the setting operation instruction triggered based on the prompt information display interface includes: in response to detecting that the management control is triggered, generating the setting operation instruction.

In this embodiment, the first terminal may determine whether the current touch point is within a position range where the management control is located based on a position where the management control is located and the position where the touch point is generated. When the current touch point is determined to be within the position range where the management control is located, it means that the user wants to set the connection function of the second terminal, and at this time, the first terminal determines that the setting operation instruction is triggered. FIG. 6 shows a schematic diagram of the layout of the management control. As an example, the second terminal serves as the earphone, the management control may be disposed at a right end of the prompt information display interface. Optionally, the management control may also be disposed at other positions of the prompt information display interface. A relative position of the management control may be determined based on positions of other identifiers of the prompt information display interface.

In this embodiment, the user can trigger the setting operation instruction based on the management control in the prompt information display interface, and a range of the triggering area is accurate, which causes no false triggering operation, and simplifies the setting operation of the user.

In order to enable the user to obtain information of the second terminal that is currently connected with the first terminal, in an embodiment, the setting interface further includes a device identifier of the second terminal. The device identifier of the second terminal is an identifier representing the information of the current second terminal, and the device identifier thereof may be an icon identifier, the device identifier, a symbol identifier, or other specified meaning identifiers of the second terminal.

Optionally, in order to show device information of the second terminal more intuitively, in an embodiment, the device identifier of the second terminal includes a device icon and/or a device name of the second terminal.

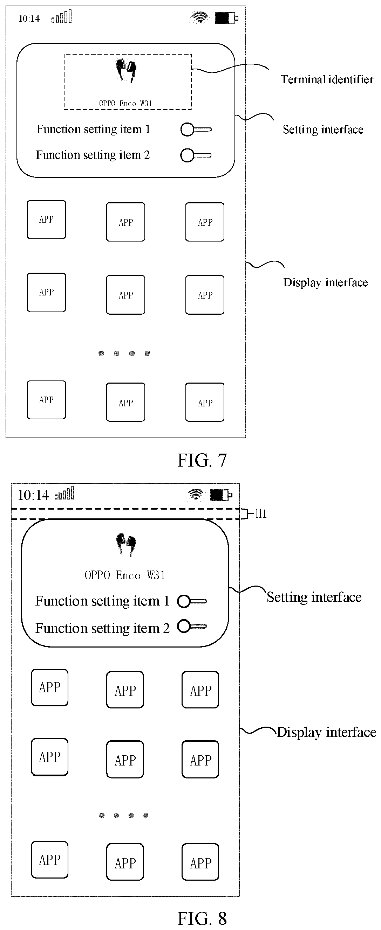

In this embodiment, the device identifier of the second terminal may be disposed at the top of the setting interface, or at other specified positions of the setting interface, and a relative position of the device identifier is determined based on positions of other identifiers in the setting interface. For example, a schematic diagram of the layout of the device identifier of the second terminal in the setting interface may be shown in FIG. 7. As an example, the second terminal serves as the earphone, a content in a dotted box in FIG. 7 is the device identifier of the second terminal. Optionally, the device identifier may be the icon identifier of the second terminal, the device identifier of the second terminal, or the icon identifier and the device identifier of the second terminal. In a case where the device identifier is the icon identifier and the device identifier of the second terminal, a layout manner of the icon identifier and the device identifier may be parallel in a same row, or be displayed in two rows as shown in FIG. 7, which is not limited in this embodiment.

In this embodiment, the device identifier of the second terminal is disposed in the setting interface, so that the user can intuitively learn information of the currently provided second terminal.

When layout setting is performed on the setting interface, a position, size, and the like of the setting interface may also be specified. In an embodiment, a distance between an upper boundary of the setting interface and a lower boundary of a status bar of the current display interface is greater than zero.

In this embodiment, as illustrated in FIG. 8, as an example, the second terminal serves as the earphone, FIG. 8 shows the distance between the upper boundary of the setting interface and the lower boundary of the status bar of the current display interface, and the distance may be expressed as H1. When the layout setting is performed on the setting interface, H1 may be set as a number that is greater than 0. Optionally, when the layout setting is performed on the setting interface, the distance H1 is set based on a size of the status bar, a size of the setting interface, and a size of the current display interface. For example, the lower boundary of the status bar may be determined based on to the size and a position of the status bar, the upper boundary of the setting interface is determined based on the size and a position of the setting interface, and the distance H1 between the setting interface and the status bar is determined based on the size of the current display interface with considering viewing suitability of the user, which are not limited in this embodiment.

In this embodiment, the layout setting of the setting interface is performed based on the upper boundary of the setting interface and the lower boundary of the status bar of the current display interface, which ensures that floating display of the setting interface has no influence on display of the status bar in the current display interface, and optimizes user experience.

Optionally, in an embodiment, a distance between an upper boundary of the setting interface and an upper boundary of the current display interface is greater than a first predetermined threshold.

Here, the first predetermined threshold may be determined based on a height of a status bar. The first predetermined threshold may be equal to the height of the status bar, or a sum of the height of the status bar and an allowable error.

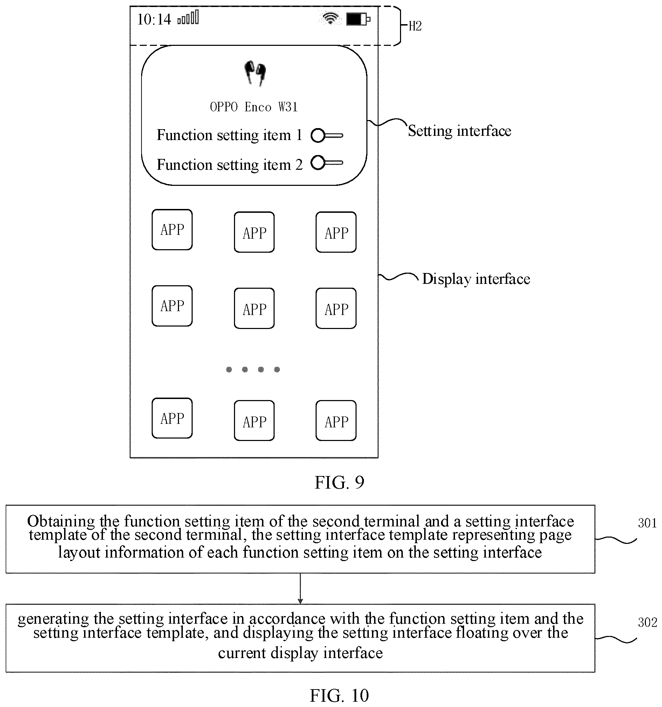

In this embodiment, with reference to FIG. 9, as an example, the second terminal serves as the earphone, FIG. 9 shows the distance between the upper boundary of the setting interface and the upper boundary of the current display interface, and the distance may be expressed as H2. Optionally, when the layout setting is performed on the setting interface, the layout of the setting interface is performed based on the first predetermined threshold. For example, the height of the status bar is 1 cm, and the allowable error is 0.2 cm, so a value range of the first predetermined threshold may be (1 cm, 1.2 cm). At this time, the distance H2 is determined based on the first predetermined threshold, and the distance H2 may be a value that is greater than 1.2 cm and smaller than a height of the current display interface. Further, a font size of information in the setting interface may also be set according to the viewing suitability, and the setting interface is determined to be disposed on the top, the middle, or the bottom of the current display interface based on the font size, an amount of information in the setting interface, and a size of a current interface, so as to determine the corresponding distance H2, which is not limited in this embodiment.

In this embodiment, the layout setting of the setting interface is performed based on the upper boundary of the setting interface and the upper boundary of the current display interface. Since the upper boundary of the current display interface has no change, by using a certain fixed value as a reference object, the method simply and accurately ensures that the layout of the setting interface has no other impact on the current display interface and the status bar, thereby improving picture comfort.

Optionally, the first terminal may determine a setting interface corresponding to the second terminal based on a type of the second terminal. In an embodiment, as illustrated in FIG. 10, the displaying the setting interface floating over the current display interface includes actions at block 301 and 302.

At block 301, the function setting item of the second terminal and a setting interface template of the second terminal are obtained. The setting interface template represents page layout information of each function setting item on the setting interface.

Here, the first terminal may pre-construct setting interface templates corresponding to different types of second terminals, for example, in the case where the second terminal is the camera, the first terminal constructs a setting interface template corresponding to the camera; and in the case where the second terminal is the earphone, the first terminal constructs a setting interface template corresponding to the earphone.

In this embodiment, the setting interface template includes the function setting item corresponding to the second terminal, and the function setting items in different types of setting interface templates are different. For example, in the case where the second terminal is the camera, the function setting item in the setting interface template corresponding to the second terminal may include the photographing aperture, the photographing depth of field, the photographing countdown, and the like; and in the case where the second terminal is the earphone, the function setting item in the setting interface template corresponding to the second terminal may include the noise reduction, wearing sensing, sound effect mode, and the like.

At block 302, the setting interface is generated in accordance with the function setting item and the setting interface template, and the setting interface floating over the current display interface is displayed.

In this embodiment, after detecting a connection with the second terminal, the first terminal determines the type of the second terminal based on the obtained device identifier of the second terminal, determines the setting interface template corresponding to the second terminal based on the type of the second terminal, and generates the setting interface based on the function setting item and the setting interface template. For example, the second terminal is determined to be the earphone based on the device identifier of the second terminal, then the setting interface template corresponding to the earphone is determined from a setting interface template database, the setting interface corresponding to the earphone is generated in accordance with the setting interface template corresponding to the earphone and function setting item corresponding to the earphone, and the setting interface floating over the current display interface is displayed, which are not limited in this embodiment.

In this embodiment, the first terminal may determine the type of the second terminal based on the device identifier of the second terminal, to adaptively determine the setting interface template corresponding to the second terminal, so that the generated setting interface may accurately reflect related function setting item information of the current second terminal.

Similarly, in order to enable the user to intuitively learn device information corresponding to the prompt information display interface, in an embodiment, the prompt information display interface includes a device identifier of the second terminal and connection success prompt information.

Here, the device identifier of the second terminal is the identifier representing the information of the current second terminal, and the device identifier may be the icon identifier, device identifier, symbol identifier, or other specified meaning identifiers of the second terminal. The connection success prompt information may be a specified character identifier, such as "connected", or "connection success", or other specified identifiers.

Optionally, in an embodiment, the device identifier includes a device icon and/or a name of the second terminal.

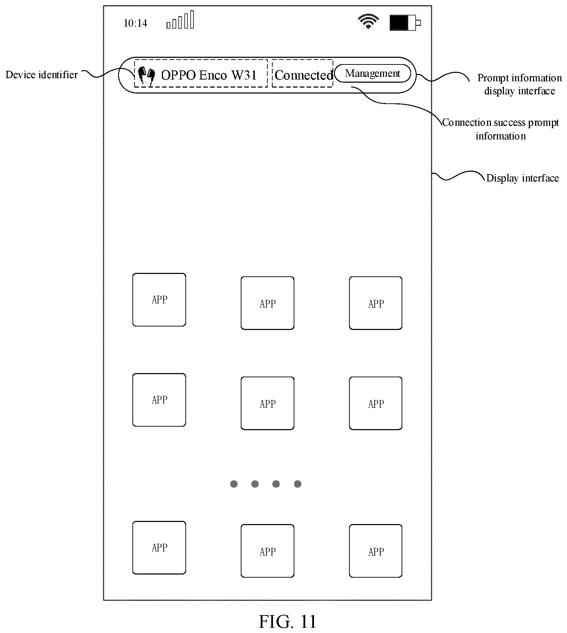

In this embodiment, the device identifier of the second terminal may be the icon identifier, or device identifier, or icon identifier and device identifier of the second terminal. As illustrated in FIG. 11, in the case where the device identifier is the icon identifier and device identifier of the second terminal, the layout manner of the icon identifier and device identifier may be parallel in the same row, which is not limited in this embodiment.

In this embodiment, the device identifier of the second terminal and the connection success prompt information are disposed in the prompt information display interface. Layout positions of the device identifier of the second terminal and the connection success prompt information are determined based on the size of the prompt information display interface. For example, a schematic diagram of the layout of the prompt information display interface may be shown in FIG. 11. As an example, the second terminal serves as the earphone, the prompt information display interface in FIG. 11 includes two dotted boxes that are a left dotted box including the device identifier of the second terminal, and a right dotted box including the connection success prompt information. It should be noted that FIG. 11 only gives one kind of the layout of the prompt information display interface, and the layout of the prompt information display interface may further be that the connection success prompt information disposed on the left side, and the device identifier of the second terminal disposed on the right side, which is not limited in this embodiment.

In this embodiment, the device identifier of the second terminal and a connection success identifier are disposed in the prompt information display interface, and particularly, the device identifier of the second terminal includes an icon and/or a name, which enables the user to know the device information of the second terminal and whether the second terminal is successfully connected.

In some special cases, in an embodiment, the prompt information display interface further includes a mute control. The method further includes: in response to detecting that the mute control is triggered, controlling the second terminal to enter a mute mode.

Here, the mute control is configured to control the second terminal to adjust a working mode of the second terminal to the mute mode. For example, in the case where the second terminal is the earphone, the mute control is configured to adjust a volume of the earphone to 0. In the case where the second terminal is the camera, the mute control is configured to close a sound generated by a camera operation, such as a sound effect during photographing.

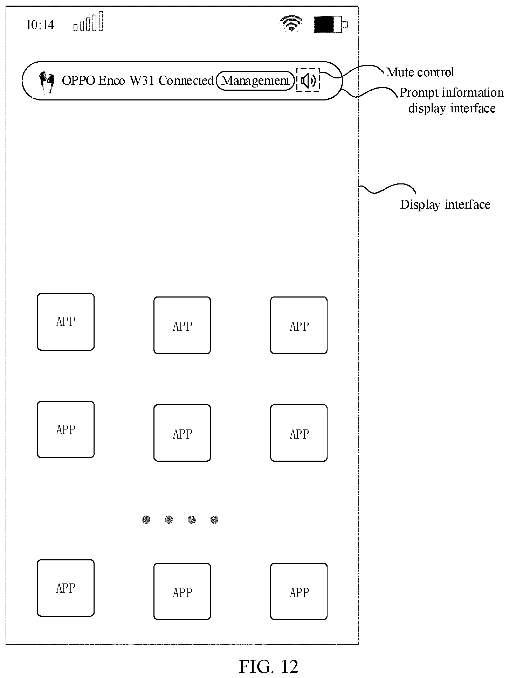

In this embodiment, when the first terminal detects that the mute control is triggered, i.e., the mute control is clicked or selected, or the touch point is generated in a area where the mute control is located, the first terminal controls the second terminal to enter the mute mode. Optionally, layout setting of the mute control may refer to FIG. 12. As an example, the second terminal serves as the earphone, the mute control may be disposed at the right end or at other specified positions of the prompt information display interface. A layout position of the mute control is determined based on other information identifiers in the prompt information display interface, which is not limited in this embodiment.

In this embodiment, the user may control the second terminal to enter the mute mode based on the mute control of the prompt information display interface, which simplifies operation selection of the user on the second terminal.

For the layout setting of the prompt information display interface, reference may be made to the method provided in this embodiment. In an embodiment, a distance between an upper boundary of the prompt information display interface and a lower boundary of a status bar of the current display interface is greater than zero, and a distance between a lower boundary of the prompt information display interface and an upper boundary of the current display interface is smaller than or equal to a predetermined threshold.

Here, the predetermined threshold refers to a determined distance threshold based on a layout relationship between the current interface and the prompt information display interface.

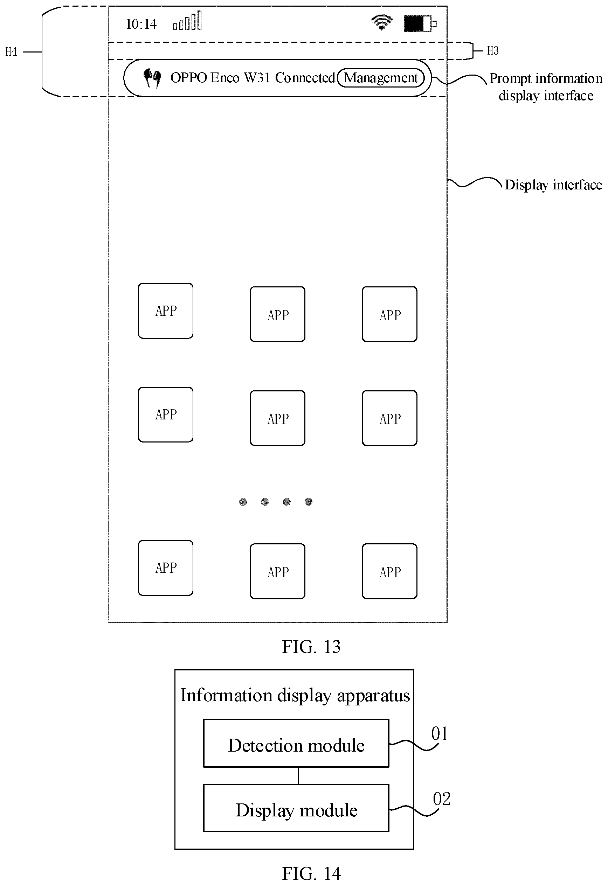

In this embodiment, referring to FIG. 13, as an example, the second terminal serves as the earphone, FIG. 13 shows the distance between the upper boundary of the prompt information display interface and the lower boundary of the status bar of the current display interface, and the distance may be expressed as H3. When the layout setting is performed on the prompt information display interface, the H3 may be set to be the number that is greater than 0. FIG. 13 also provides the distance between the lower boundary of the prompt information display interface and the upper boundary of the current display interface, which may be expressed as H4. Optionally, when the layout setting is performed on the prompt information display interface, not only a relationship between the prompt information display interface and the status bar needs to be considered, but also a layout proportion relationship between the prompt information display interface and the current interface needs to be considered, i.e., it is ensured that the prompt information display interface does not overlap the status bar, and it is ensured that the prompt information display interface is located in a top region of the current display interface. Optionally, when the predetermined threshold is 4 cm, H1 is 0.5 cm, and H4 is 2 cm, the position of the prompt information display interface and the size of the prompt information display interface may be basically determined, which are not limited in this embodiment.

In this embodiment, the layout setting of the prompt information display interface is performed based on the upper boundary and the lower boundary of the prompt information display interface, the lower boundary of the status bar of the current display interface, and the upper boundary of the current display interface, which ensures that the prompt information display interface is located at an top position of the current display interface while the prompt information display interface does not affect the status bar. In this way, the purpose of intuitively displaying the prompt information to the user is achieved, and page layout is more optimized.

Optionally, in an embodiment, the predetermined threshold is determined based on a ratio between a height of the prompt information display interface and a height of the current display interface. In this embodiment, a display interface of the first terminal has different sizes and magnitudes. In order to ensure that the prompt information display interface may be always displayed on the top of the display interface, the user may intuitively view the prompt information display interface, and a predetermined threshold corresponding to the H4 in the above embodiments may be determined based on the ratio between the height of the prompt information display interface and the height of the current display interface.

Optionally, in an embodiment, the predetermined threshold is equal to one fifth of a height of the current display interface. In this embodiment, a predetermined range corresponding to the H4 in the above embodiments may be one fifth of the height of the current display interface. For example, the display interface of the first terminal is 5.5 inches, and the corresponding height of the display interface is 12.18 cm. After calculation, the predetermined threshold may be determined to be 2.436 cm, i.e., a value range of H4 is (0, 2.436 cm), and a value of H4 and a value of H3 are determined, for example, H4 is 2 cm, and H3 is 0.2 cm, so that the upper boundary and lower boundary of the prompt information display interface may be determined, and the size and magnitude of the prompt information display interface may be determined, which is not limited in this embodiment.

In this embodiment, the layout setting of the prompt information display interface is performed based on the height of the prompt information display interface and the height of the current display interface, which ensures that the prompt information display interface is located at the top position of the current display interface while the prompt information display interface does not affect the status bar. In this way, the purpose of intuitively displaying the prompt information to the user is achieved, the layout of the display interface is optimized, and it is more in line with user habit.

The first terminal may display the floating prompt information display interface based on a predetermined template. In an embodiment, the displaying the prompt information display interface floating over the current display interface of the first terminal includes: generating the prompt information display interface based on a device identifier of a second device, the connection success prompt information, and a predetermined prompt interface template, and displaying the prompt information display interface floating over the current display interface of the first terminal. The prompt interface template represents page layout information of the prompt information display interface.

In this embodiment, the first terminal may pre-construct prompt interface templates corresponding to different types of second terminals, for example, in the case where the second terminal is the camera, the first terminal constructs a prompt interface template corresponding to the camera; and in the case where the second terminal is the earphone, the first terminal constructs a prompt interface template corresponding to the earphone. For example, after detecting the connection with the second terminal, the first terminal determines the type of the second terminal based on the obtained device identifier of the second terminal. For example, the first terminal determines that the second terminal is the earphone based on the device identifier of the second terminal. Then the first terminal determines a prompt interface template corresponding to the earphone from the prompt interface template. The first terminal generates a prompt information display interface corresponding to the earphone based on the prompt interface template corresponding to the earphone, the device identifier of the second terminal, and the connection success prompt information. The first terminal displays prompt information display interface floating over the current display interface. The specific content is not limited in this embodiment.

In this embodiment, the first terminal may determine the type of the second terminal based on the device identifier of the second terminal, so as to adaptively determine the prompt interface template corresponding to the second terminal, which enables the generated prompt information display interface to accurately reflect the related information of the current second terminal.

It should be understood that although steps in each of the flowcharts in FIG. 2 and FIG. 10 are illustrated in a sequence indicated by an arrow, these steps are not necessarily executed in the sequence indicated by the arrow. Unless explicitly stated herein, execution of these steps is not strictly limited to the sequence, and these steps may be performed in other sequences. In addition, at least some of the steps in FIG. 2 and FIG. 10 may include several sub-steps or several stages. These sub-steps or stages are not necessarily executed and completed at the same moment, but may be executed at different moments. These sub-steps or stages are also not necessarily executed sequentially one by one, but may be executed in turn or alternately with other steps, or sub-steps of other steps, or at least some of the stages.

FIG. 14 is a structural block diagram of an information display apparatus according to an embodiment. As illustrated in FIG. 14, the information display apparatus includes a detection module 01 and a display module 02. The detection module is configured to detect whether a first terminal and a second terminal are successfully connected with each other. The display module 02 is configured to display, in response to the first terminal and the second terminal being successfully connected with each other, a prompt information display interface floating over a current display interface of the first terminal. The prompt information display interface is used for prompting that the first terminal and the second terminal are successfully connected with each other.

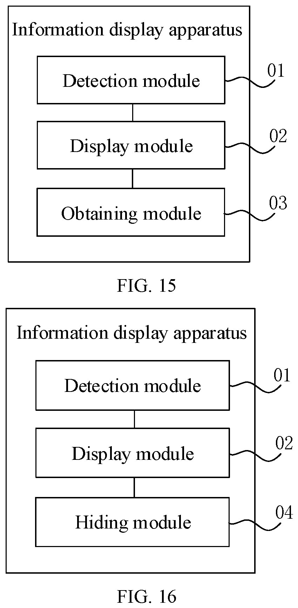

In an embodiment, as illustrated in FIG. 15, the information display apparatus further includes an obtaining module 03. The obtaining module 03 is configured to: in response to obtaining a setting operation instruction triggered based on the prompt information display interface in a predetermined time period, hide the prompt information display interface and display a setting interface floating over the current display interface. The setting interface includes a function setting item of the second terminal.

In an embodiment, the obtaining module 03 is configured to trigger, in response to detecting a touch operation based on a touch screen area corresponding to the prompt information display interface, the setting operation instruction.

In an embodiment, the prompt information display interface includes a management control. The obtaining module 03 is configured to generate, in response to detecting that the management control is triggered, the setting operation instruction.

In an embodiment, the setting interface further includes a device identifier of the second terminal.

In an embodiment, the setting interface further includes a device identifier of the second terminal.

In an embodiment, a distance between an upper boundary of the setting interface and a lower boundary of a status bar of the current display interface is greater than zero.

In an embodiment, a distance between an upper boundary of the setting interface and an upper boundary of the current display interface is greater than a first predetermined threshold.

In an embodiment, the obtaining module 03 is configured to: obtain the function setting item of the second terminal and a setting interface template of the second terminal, the setting interface template representing page layout information of each function setting item on the setting interface; and generate the setting interface in accordance with the function setting item and the setting interface template, and display the setting interface floating over the current display interface.

In an embodiment, as illustrated in FIG. 16, the information display apparatus further includes a hiding module 04. The hiding module 04 is configured to: in response to obtaining no setting operation instruction triggered based on the prompt information display interface in the predetermined time period, hide the prompt information display interface and display a device icon of the second terminal floating over a status bar of the current display interface.

In an embodiment, the prompt information display interface includes a device identifier of the second terminal and connection success prompt information.

In an embodiment, the device identifier includes a device icon and/or a name of the second terminal.

In an embodiment, the prompt information display interface further includes a mute control. The detection module 01 is further configured to control, in response to detecting that the mute control is triggered, the second terminal to enter a mute mode.

In an embodiment, a distance between an upper boundary of the prompt information display interface and a lower boundary of a status bar of the current display interface is greater than zero, and a distance between a lower boundary of the prompt information display interface and an upper boundary of the current display interface is smaller than or equal to a predetermined threshold.

In an embodiment, the predetermined threshold is determined based on a ratio between a height of the prompt information display interface and a height of the current display interface.

In an embodiment, the predetermined threshold is equal to one fifth of a height of the current display interface.

In an embodiment, the display module 02 is configured to generate the prompt information display interface based on a device identifier of a second device, the connection success prompt information, and a predetermined prompt interface template, and display the prompt information display interface floating over the current display interface of the first terminal. The prompt interface template represents page layout information of the prompt information display interface.

The division of the information display apparatus into various modules is for illustration only. In other embodiments, the information display apparatus may be divided into different modules as required to complete all or part of the functions of the information display apparatus.

For specific limitations of the information display apparatus, reference may be made to limitations of the information display method, which will not be repeated here. Each module in the information display apparatus may be implemented in whole or in part by software, hardware and a combination thereof. The above modules can be embedded in or independent of the processor in the computer device in the form of hardware, or stored in the memory in the computer device in the form of software, such that the processor can invoke and execute operations corresponding to the above modules.

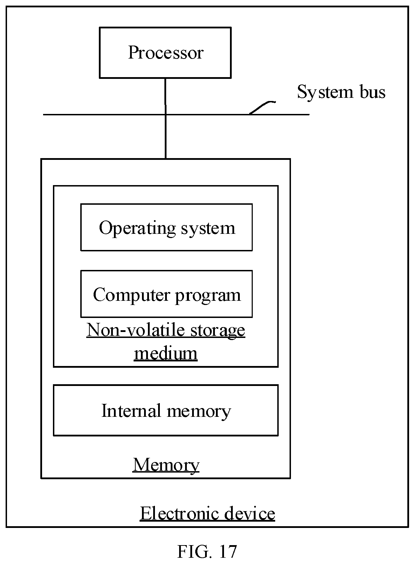

FIG. 17 is a schematic diagram illustrating an internal structure of an electronic device according to an embodiment. As illustrated in FIG. 17, the electronic device includes a processor and a memory that are connected via a system bus. Here, the processor is configured to provide computing and control capabilities to support the operation of the entire electronic device. The memory may include a non-volatile storage medium and an internal memory. The non-volatile storage medium stores an operating system and a computer program. The computer program can be executed by the processor to implement the information display method according to any of the following embodiments. The internal memory provides a cache execution environment for the operating system and the computer program in the non-volatile storage medium. The electronic device may be any terminal device such as a mobile phone, a tablet computer, a Personal Digital Assistant (PDA), a Point of Sales (POS), a vehicle-mounted computer, and a wearable device.

Each module in the information display apparatus according to the embodiments of the present disclosure may be implemented in the form of a computer program. The computer program can run on a terminal or a server. A program module constituted by the computer program can be stored in the memory of the electronic device. The computer program, when executed by the processor, implements the steps of the methods described in the embodiments of the present disclosure.

The embodiments of the present disclosure further provide a computer-readable storage medium, such as one or more non-volatile computer-readable storage media including computer-executable instructions. When executed by one or more processors, the computer-executable instructions cause the one or more processors to perform steps of an information display method.

A computer program product including instructions, when executed on a computer, causes the computer to perform the information display method.

Any reference to a memory, a storage, a database, or other media as used herein may include a non-volatile memory and/or a volatile memory. The nonvolatile memory may include a Read Only Memory (ROM), a Programmable ROM (PROM), an Electrically Programmable ROM (EPROM), an Electrically Erasable Programmable ROM (EEPROM), or a flash memory. The volatile memory may include a Random Access Memory (RAM) that acts as an external cache memory. By way of illustration, rather than limitation, an RAM is available in various forms such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Rambus Direct RAM (RDRAM), a Direct Rambus Dynamic RAM (DRDRAM), and a Rambus Dynamic RAM (RDRAM).

The above embodiments illustrate merely some implementations of the present disclosure. Although description of the above embodiments is specific and detailed, the description should not be construed as limitations on the scope of the present disclosure. It should be pointed out that, various modifications and improvements can be made by those skilled in the art without departing from the concept of the present disclosure, and shall fall within the protection scope of the present disclosure as defined by the claims as attached.

## Claims

1. An information display method, comprising:
detecting whether a first terminal and a second terminal are successfully connected with each other; and
displaying, in response to the first terminal and the second terminal being successfully connected with each other, a prompt information display interface floating over a current display interface of the first terminal, the prompt information display interface being used for prompting that the first terminal and the second terminal are successfully connected with each other.

2. The method according to claim 1, further comprising:
in response to obtaining a setting operation instruction triggered based on the prompt information display interface in a predetermined time period, hiding the prompt information display interface and displaying a setting interface floating over the current display interface, the setting interface comprising a function setting item of the second terminal.

3. The method according to claim 2, wherein said obtaining the setting operation instruction triggered based on the prompt information display interface comprises:
triggering, in response to detecting a touch operation based on a touch screen area corresponding to the prompt information display interface, the setting operation instruction.

4. The method according to claim 2, wherein the prompt information display interface comprises a management control, and said obtaining the setting operation instruction triggered based on the prompt information display interface comprises:
generating, in response to detecting that the management control is triggered, the setting operation instruction.

5. The method according to any one of claims 2 to 4, wherein the setting interface further comprises a device identifier of the second terminal.

6. The method according to claim 5, wherein the device identifier of the second terminal comprises a device icon and/or a device name of the second terminal.

7. The method according to any one of claims 2 to 4, wherein a distance between an upper boundary of the setting interface and a lower boundary of a status bar of the current display interface is greater than zero.

8. The method according to any one of claims 2 to 4, wherein a distance between an upper boundary of the setting interface and an upper boundary of the current display interface is greater than a first predetermined threshold.

9. The method according to any one of claims 2 to 4, wherein said displaying the setting interface floating over the current display interface comprises:
obtaining the function setting item of the second terminal and a setting interface template of the second terminal, the setting interface template representing page layout information of each function setting item on the setting interface; and
generating the setting interface in accordance with the function setting item and the setting interface template, and displaying the setting interface floating over the current display interface.

10. The method according to claim 2, further comprising:
in response to obtaining no setting operation instruction triggered based on the prompt information display interface in the predetermined time period, hiding the prompt information display interface and displaying a device icon of the second terminal floating over a status bar of the current display interface.

11. The method according to claim 1, wherein the prompt information display interface comprises a device identifier of the second terminal and connection success prompt information.

12. The method according to claim 11, wherein the device identifier comprises a device icon and/or a name of the second terminal.

13. The method according to claim 11 or 12, wherein the prompt information display interface further comprises a mute control; and the method further comprises:
controlling, in response to detecting that the mute control is triggered, the second terminal to enter a mute mode.

14. The method according to claim 1, wherein a distance between an upper boundary of the prompt information display interface and a lower boundary of a status bar of the current display interface is greater than zero, and a distance between a lower boundary of the prompt information display interface and an upper boundary of the current display interface is smaller than or equal to a predetermined threshold.

15. The method according to claim 14, wherein the predetermined threshold is determined based on a ratio between a height of the prompt information display interface and a height of the current display interface.

16. The method according to claim 14, wherein the predetermined threshold is equal to one fifth of a height of the current display interface.

17. The method according to claim 11, wherein said displaying the prompt information display interface floating over the current display interface of the first terminal comprises:
generating the prompt information display interface based on a device identifier of the second device, the connection success prompt information, and a predetermined prompt interface template, and displaying the prompt information display interface floating over the current display interface of the first terminal, the prompt interface template representing page layout information of the prompt information display interface.

18. An information display apparatus, comprising:
a detection module configured to detect whether a first terminal and a second terminal are successfully connected with each other; and
a display module configured to display, in response to the first terminal and the second terminal being successfully connected with each other, a prompt information display interface floating over a current display interface of the first terminal, the prompt information display interface being used for prompting that the first terminal and the second terminal are successfully connected with each other.

19. An electronic device, comprising:
a memory having a computer program stored thereon; and
a processor, wherein the computer program, when executed by the processor, causes the processor to implement the steps of the information display method according to any one of claims 1 to 17.

20. A computer-readable storage medium, having a computer program stored thereon, wherein the computer program, when executed by a processor, implements the steps of the information display method according to any of claims 1 to 17.
